# EUROPÄISCHE PATENTANMELDUNG

(11) **EP 1 388 994 A2**
(43) Veröffentlichungstag der Anmeldung: **11.02.2004**
(21) Anmeldenummer: 03012783.1
(22) Anmeldetag: 05.06.2003
(51) Int. Cl.: H04M 1/274, H04M 1/247

(54) **Bedieneinheit**

(30) Priorität: 06.08.2002 DE 10235890
(71) Anmelder: ROBERT BOSCH GMBH, 70442 Stuttgart (DE)
(72) Erfinder: Uhl, Heribert, 71263 Weil Der Stadt (DE)

(57) **Zusammenfassung**

Es wird eine Bedieneinheit (1) für ein elektrisches Gerät (20) vorgeschlagen, bei der die Darstellung von auszugebenden Informationen in einer an der Bedieneinheit (1) vorgesehenen flächigen Anzeige (2) mit dem Einsetzen in ein elektrisches Gerät (20) drehbar ist. Dabei wird mit dem Einsetzen zusätzlich zu den Informationen über die Bedieneinheit (1) in einem weiteren Anzeigebereich (23) eine Menüauswahl für die Steuerung des elektrischen Geräts (20) angezeigt.

## Beschreibung

### Stand der Technik

Die Erfindung geht aus von einer Bedieneinheit nach der Gattung des Hauptanspruchs. Es sind schon Bedieneinheiten bekannt, die von elektrischen Geräten abnehmbar sind, insbesondere, um keinen Anreiz für einen Diebstahl des elektrischen Geräts zu bieten. Um eine Nutzung der abgenommenen Bedieneinheit auch nach einer Abnahme von dem elektrischen Gerät zu gewährleisten, muss diese gut in der Hand haltbar sein und in diesem Zustand gut ablesbar sein. Oftmals sind jedoch Anzeigeeinheiten für den Betrieb an dem elektrischen Gerät derart an der Bedieneinheit angeordnet, dass die Anzeige nach Abnahme der Bedieneinheit infolge ihrer Ausrichtung entsprechend ihrer Anordnung an dem elektrischen Gerät nur schlecht ablesbar ist. Eine Nutzung der Bedieneinheit nach der Abnahme von dem elektrischen Gerät wird hierdurch erschwert.

Aus der DE 198 49 888 A1 ist ein Kommunikationsgerät bekannt, bei dem die Darstellung der Informationen auf dem Display in der Weise variiert, dass sich der Anzeigetext in der Anzeige dreht. Da jedoch die Anzeigefläche rechtwinklig ausgeführt ist, kann dies zu Problemen in der Darstellung führen, denn hierdurch kann möglicherweise die zur Verfügung stehende Anzeigefläche nicht optimal ausgenutzt werden.

### Vorteile der Erfindung

Die erfindungsgemäße Bedieneinheit mit den Merkmalen des Hauptanspruchs hat demgegenüber den Vorteil, dass nach dem Einsetzen der Bedieneinheit an dem elektrischen Gerät zwei Anzeigebereiche zur Verfügung stehen, wobei in dem einen Anzeigebereich Funktionen der Bedieneinheit und in dem anderen Anzeigebereich Funktionen des zu bedienenden elektrischen Geräts zur Steuerung des Geräts dargestellt werden. Hierdurch ist es für einen Benutzer möglich, eine klare Gliederung zwischen den verschiedenen Gerätefunktionen zu erhalten. Durch die Drehung kann insbesondere bei einem rechteckigen Bildschirm eine ansonsten auftretende Anzeigenverzerrung verhindert werden, während andererseits vorteilhaft ein gesonderter Bedienbereich für das elektrische Gerät in die Anzeigefläche eingeblendet wird. Nach einer Abnahme der Bedieneinheit von dem elektrischen Gerät werden anschließend wieder nur Funktionen der Bedieneinheit selbst nach einem Zurückdrehen der Anzeigeausrichtung in die Ausgangslage angezeigt, so dass bei einer abgenommenen Bedieneinheit die volle Anzeigefläche zur Bedienung der Funktionen der Bedieneinheit zur Verfügung steht.

Durch die in den Unteransprüchen aufgeführten Maßnahmen sind vorteilhafte Weiterbildungen und Verbesserungen der im Hauptanspruch angegebenen Bedieneinheit möglich. Besonders vorteilhaft ist, hierbei den ersten und den zweiten Anzeigebereich nebeneinander anzuordnen und voneinander zu trennen, um eine klare Gliederung zwischen den verschiedenen Funktionsbereichen zu erhalten.

Besonders vorteilhaft ist, die Darstellung in der Anzeigefläche bei einem Einsetzen in die Halterung an dem elektrischen Gerät automatisch in eine vorgegebene Stellung zu drehen, so dass eine Änderung der Anzeigendarstellung nicht erst durch den Benutzer ausgelöst werden muss.

Insbesondere ist eine Drehung um 90° vorteilhaft, da im allgemeinen länglich ausgeführte Bedieneinheiten in waagerecht angeordnete Halterungen eingesetzte werden, während sie in der Hand im allgemeinen an der Längsseite gehalten werden, so dass hierbei ein Winkelunterschied von 90° zwischen den verschiedenen Anzeigedarstellungen eine gute Ablesbarkeit für beide Anwendungen gewährleistet.

Ferner ist vorteilhaft, in die Bedieneinheit eine Funkschnittstelle insbesondere für eine Mobilfunkverbindung zu integrieren. Hierdurch kann eine Mobilfunkfunktion mit in die Bedieneinheit des elektrischen Gerätes integriert werden und steht auch z.B. außerhalb eines Fahrzeugs mit einer Halterung für die Bedieneinheit zur Verfügung.

Besonders vorteilhaft ist, eine Radiofunktion in das elektrische Gerät zu integrieren, so dass akustische Daten, insbesondere auch in der Bedieneinheit gespeicherte Audiodaten, über mit dem elektrischen Gerät verbundene Ausgabeeinheiten ausgegeben werden können. Z.B. ist es hierdurch möglich, Audiodaten von einer Recheneinheit außerhalb eines Fahrzeugs auf die Bedieneinheit zu übertragen, wobei diese Audiodaten dann nach einem Einsetzen der Bedieneinheit in das elektrische Gerät von dem Gerät ausgelesen und über eine Lautsprechereinheit in dem Fahrzeug ausgegeben wird. Hierdurch kann auf das Mitführen zusätzlicher Datenträger für eine Musik- oder Sprachausgabe, z.B. für eine Diktiergerätefunktion, verzichtet werden. Ferner kann, sofern eine Telefonfunktion in der Bedieneinheit vorgesehen ist, eine elektrische Ausgabeeinheit, z.B. der Radiolautsprecher, und ein im Fahrzeug angeordnetes Mikrophon, nach Einsetzen der Bedieneinheit als eine Freisprechanlage im Fahrzeug für die in die Bedieneinheit integrierte Mobiltelefonfunktion genutzt werden. Ferner ist vorteilhaft, hierbei eine Fernbedienfunktion in die Bedieneinheit zu integrieren, die z.B. via Funk- und/oder Infrarotübertragung eine Steuerungsfunktion für das elektrische Gerät auch in einem abgenommenen Zustand ermöglicht.

Ferner ist vorteilhaft, insbesondere in einem Fahrzeug die Bedieneinheit zur Bedienung eines elektrischen Gerätes zu nutzen. Mit der abnehmbaren Bedieneinheit kann ein Diebstahlsanreiz für das elektrische Gerät verringert werden. Zudem können platzsparend Zusatzfunktionen in die Bedieneinheit integriert werden. Diese Zusatzfunktionen können dann auch in bequemer Weise nach Abnahme der Bedieneinheit außerhalb des Fahrzeugs zur Verfügung stehen, wobei die Anzeige durch einen Benutzer stets optimal ablesbar ist.

Durch die Verbindung mit weiteren optischen und/oder akustischen Ausgabeeinrichtungen können die weiteren im Fahrzeug vorgesehenen Funktionalitäten auch zur Ausgabe von Funktionen der Bedieneinheit genutzt werden, wobei z.B. die Informationen über den Zustand der Bedieneinheit, die in dem der Bedieneinheit zugeordneten Bereich der Anzeigefläche dargestellt werden, auch in einer anderen Fahrzeuganzeige, z.B. in einer Mittelkonsolenanzeige oder in einem Kombiinstrument vor dem Fahrer, zur Anzeige gebracht werden.

Ferner ist vorteilhaft, durch weitere, an der Vorderseite des elektrischen Geräts angeordnete Bedienelemente, die Anzahl der zur Verfügung stehenden Bedienelemente zu vergrößern, um eine möglichst komfortable Bedienung des elektrischen Geräts und in einer weiteren Ausführungsform auch der Funktionen der Bedieneinheit selbst nach einem Einsetzen der Bedieneinheit an dem elektrischen Gerät zu ermöglichen.

### Zeichnung

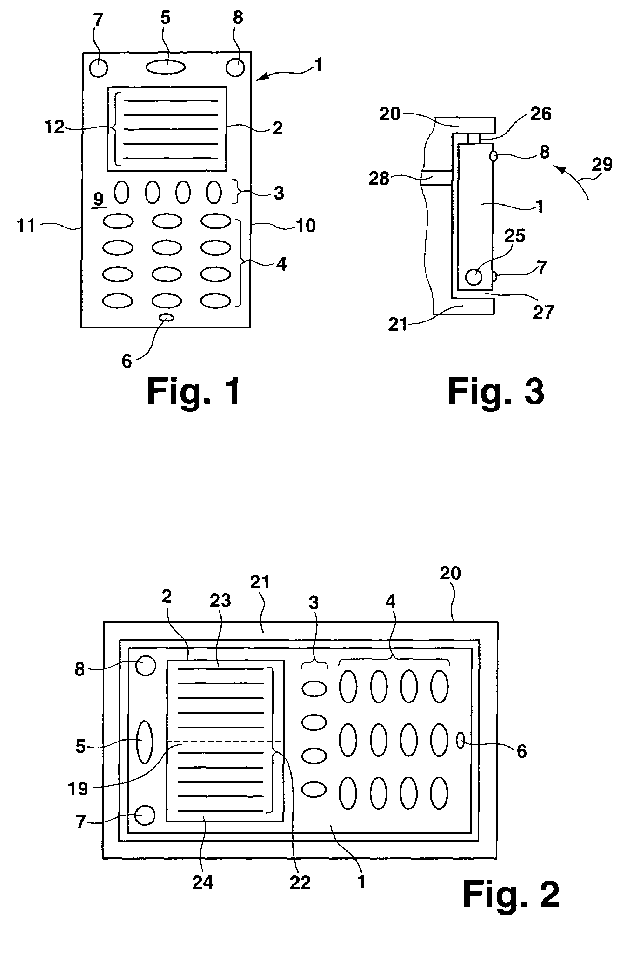

Ausführungsbeispiele der Erfindung sind in der Zeichnung dargestellt und in der nachfolgenden Beschreibung näher erläutert. Es zeigen
Figur 1 eine Aufsicht auf eine erfindungsgemäße Bedieneinheit,

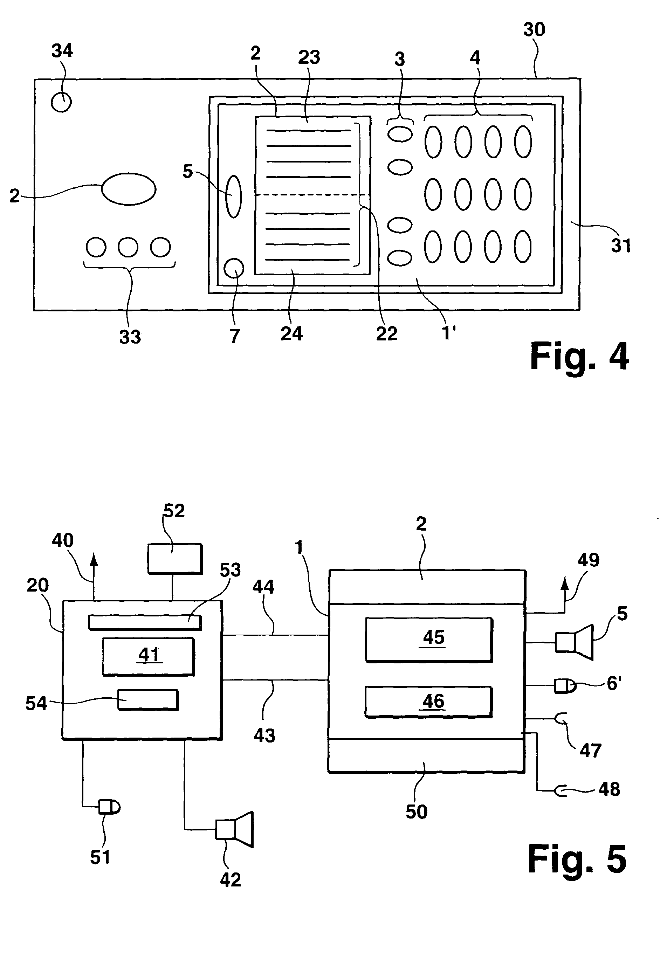

Figur 2 die erfindungsgemäße Bedieneinheit der Figur 1 eingesetzt an einer Frontseite eines elektrischen Gerätes mit einer gedrehten Anzeigendarstellung, Figur 3 eine Seitenansicht der erfindungsgemäßen Bedieneinheit eingesetzt in das erfindungsgemäße elektrische Gerät in einer Seitenansicht, Figur 4 ein zweites Ausführungsbeispiel eines erfindungsgemäßen elektrischen Geräts mit einer erfindungsgemäßen Bedieneinheit, Figur 5 eine schematische Darstellung der Baugruppen einer erfindungsgemäßen Bedieneinheit zusammen mit einem erfindungsgemäßen elektrischen Gerät.

### Beschreibung des Ausführungsbeispiels

Die erfindungsgemäße Bedieneinheit kann für beliebige elektrische Geräte verwendet werden. Sie kann einerseits in einer externen Halterung neben dem elektrischen Gerät angeordnet werden und entweder über eine drahtgebundene oder bevorzugt über eine Funkverbindung mit dem elektrischen Gerät verbunden sein. Andererseits kann die Bedieneinheit in eine Frontfläche des elektrischen Geräts eingesetzt werden. Im allgemeinen sind elektrische Geräte derart ausgeführt, dass ihre Grundfläche größer ist als ihre Seitenflächen, so dass sie auf einer ebenen Fläche auch ohne weiter Stützelemente sicher stehen können, ohne umzufallen. Bei solchen Geräten und auch bei Einbaugeräten sind Bedienflächen im allgemeinen waagerecht ausgerichtet. Dies trifft auch für Fahrzeuge zu, wobei die vorliegende Erfindung am Beispiel eines elektrischen Gerätes, in Form einer Autoradioeinheit oder, mit weiteren Funktionen versehen, in Form einer Fahrerinformationseinrichtung in einem Fahrzeug, erläutert wird.

In der Figur 1 ist eine Aufsicht auf eine Vorderseite einer erfindungsgemäßen Bedieneinheit 1 abgenommen von einem elektrischen Gerät dargestellt. Auf der Vorderseite der als eine im wesentlichen flachen Tafel ausgeführten Bedieneinheit 1 ist eine Anzeige 2 angeordnet. Neben der flächigen Anzeige 2 befinden sich Kipptasten 3 und eine Ziffernblocktastatur 4. Ferner ist ein Lautsprecher 5 an einem der Ziffernblocktastatur 4 abgewandten Seite der Anzeige 2 mit auf der Vorderseite der Bedieneinheit 1 angeordnet. An einem dem Lautsprecher 5 entgegengesetzten Ende der Vorderseite ist eine Öffnung 6 für ein dahinter angeordnetes Mikrophon in ein Gehäuse der Bedieneinheit 1 eingebracht. An einem Rand der Vorderseite ist ferner eine erste Drucktaste 7 und eine zweite Drucktaste 8 angeordnet, die jeweils für Funktionen zum Herauslösen der Bedieneinheit 1 aus einer für sie vorgesehenen Halterung an einem elektrischen Gerät bestimmt sind. Die Bedieneinheit 1 wird vorzugsweise derart in der Hand gehalten, dass eine Handfläche eine linke Seitenfläche 11 berührt, die der Ziffernblocktastatur 4 gegenüberliegende Rückseite der Bedieneinheit 1 umgreift und die Finger eine rechte Seitenfläche 10 in Bezug auf die Ziffernblocktastatur 4 der Bedieneinheit 1 halten, bei einer hier beispielhaft gewählten Haltung mit der linken Hand. Es können nun die Tasten 3, 4 der Bedieneinheit bedient werden, und Funktionen der Bedieneinheit können in der Anzeige 2 abgelesen werden. In einer bevorzugten Ausführungsform umfasst die Bedieneinheit 1 auch eine Telefonfunktion, wobei ein Sprachsignal über die Mikrophonöffnung 6 aufgenommen wird und eine Audioausgabe über den Lautsprecher 5 erfolgt. Die Zifferntastatur dient dabei vorzugsweise zur Eingabe einer Rufnummer oder zur Eingabe einer Textnachricht.

Die Anzeige 2 ist vorzugsweise als eine Flüssigkristallanzeige oder als eine Elektrolumineszenzanzeige ausgeführt und weist eine rechteckige Anzeigefläche auf. In der Anzeige 2, deren Anzeigefläche sich in einer bevorzugten Ausführungsform aus einzeln ansteuerbaren Bildpunkten zusammensetzt, können Grafiken oder Textangaben dargestellt werden. Die Zeilenlinien 12 einer Textausgabe verlaufen von der linken Seitenfläche 11 der Oberfläche 9 der Bedieneinheit 1 zu der rechten Seitenfläche 10, wobei die Zeilenlinien in der Darstellung der Figur 1 nur schematisch dargestellt sind und eine lineare Anordnung einer Folge von Buchstaben oder Symbolen repräsentieren sollen. Damit ist eine Oberseite der Anzeigedarstellung in Richtung des Lautsprechers 5 und eine Unterseite in Richtung der Tasten 3, 4 definiert. Diese Ausrichtung entspricht einer Haltung der Bedieneinheit 1 in der Hand, so dass bei einer Eingabe von einer Telefonnummer die Anzeige 2 entsprechend der Zeilenlinien 12 gut ablesbar ist. Grafiken sind entsprechend der Textausrichtung ausgerichtet und ebenfalls in der Anzeige 2 darstellbar.

In der Figur 2 ist die Bedieneinheit 1 gemäß der Figur 1 in einer Autoradioeinheit 20 eingesetzt dargestellt, die vorzugsweise in der Mittelkonsole eines Kraftfahrzeugs angeordnet ist. Die Autoradioeinheit 20 weist einen Rahmen 21 mit einer von dem Rahmen umgebenen Vertiefung auf, die zur Aufnahme der Bedieneinheit 1 dient. Mit dem Einsetzen der Bedieneinheit 1 wird die Bedieneinheit 1 mit einer Recheneinheit in die Autoradioeinheit 20 entweder über elektrische Kontakte oder über eine drahtlose Schnittstelle, z.B. über eine Funkschnittstelle, verbunden. Von einer Recheneinheit der Bedieneinheit 1 wird die Darstellung in der Anzeige 2 entsprechend der Anordnung der Bedieneinheit 1 in die Autoradioeinheit 20 nach dem Einsetzen in der Weise angepasst, dass die Darstellung in der Anzeige 2 gemäß der Figur 1 entsprechend dem Uhrzeigersinn um 90° gedreht und in einem ersten Anzeigebereich in einer oberen Hälfte der Fläche der Anzeige2 dargestellt wird. Die Drehung erfolgt z.B. dadurch, dass von einer Recheneinheit der Bedieneinheit 1 unmittelbar eine entsprechend geänderte Bilddarstellung berechnet und zur Anzeige gebracht wird. In einem zweiten Anzeigebereich 24 unterhalb des ersten Anzeigebereichs 23 werden Bedieninformationen zur Steuerung der Autoradioeinheit 20 dargestellt. Die Darstellung in dem ersten Anzeigebereich 23 ist gegenüber der Darstellung in einer von der Autoradioeinheit 20 abgenommenen Bedieneinheit 1 verkleinert. Ein Benutzer kann nun zwischen einer Bedienung der Funktionen der Bedieneinheit 1, also z.B. einer Mobilfunkfunktion in dem ersten Anzeigebereich 23 und Funktionen zur Steuerung der Autoradioeinheit 20 in dem zweiten Anzeigebereich 24 wählen. In der Figur 2 ist der erste Anzeigebereich 23 und der zweite Anzeigebereich 24 durch eine gestrichelt eingezeichnete Linie 19 halbiert. In beiden Anzeigebereichen 23, 24 erfolgt nun eine Ausrichtung der Anzeige von links nach rechts entsprechend den symbolisch dargestellten Textzeilen 22. Ferner können auch in diesem Betriebsmodus Grafiken in die Anzeigebereiche eingeblendet werden. In einer bevorzugten Ausgestaltung unterscheiden sich die beiden Anzeigebereiche 23, 24 in ihrer Anzeigefarbe, so dass ein Benutzer eine schnelle und eindeutige Zuordnung der Anzeigebereiche zu der Steuerung der Bedieneinheit 1 einerseits und der Autoradioeinheit 20 andererseits treffen kann. Die Textzeilen 22 sind von dem Lautsprecher 5 zu den Kipptasten 3 von links nach rechts ausgerichtet.

Die Anzeige 2 ist in einer bevorzugten Ausführungsform fest an einer Oberfläche der Bedieneinheit 1 angeordnet und ist im übrigen selber nicht drehbar oder beweglich ausgeführt. Es wird lediglich die Darstellung von Informationen geändert, d.h. von Text und Grafiken in der Anzeige, wobei eine Anordnung von Grafiken und Texten von links nach rechts besonders leicht ablesbar ist. Dies gilt für eine Darstellung im römischen Alphabet, jedoch kann auch für Schriftarten, die eine senkrechte Schreibweise von oben nach unten ermöglichen, eine entsprechende Drehung erfolgen. In dem ersten Anzeigebereich 23 sind z.B. Mobilfunkfunktionen darstellbar, wobei z.B. eine Anzeige von gespeicherten Namen oder Telefonnummern erfolgen kann. Ferner können in dem ersten Anzeigebereich 23 auch Hinweise auf das Eintreffen von elektronisch übermittelten Nachrichten angezeigt werden. In dem zweiten Anzeigebereich 24 sind bevorzugt Funktionen der Autoradioeinheit 20 dargestellt. Z.B. kann der Name von empfangbaren Radiosendern oder deren Frequenzen angezeigt werden.

Eine Bedienung der Autoradioeinheit 20 erfolgt nun über die Tasten 3, 4 der Bedieneinheit 1, wobei entsprechend auch Aufdrucke zur Beschriftung der Tasten entsprechend der Halterichtung und der Bedienrichtung nach Einsetzen in die Autoradioeinheit 20 ausgerichtet sind. Die Kipptasten 3 sind vorzugsweise als Kipptasten ausgeführt, wobei eine der Tasten z.B. der Lautstärkeregelung der Autoradioeinheit 20 dient. Eine Funktionsbelegung der Kipptasten 3 wird dabei vorzugsweise in der Anzeige 2 dargestellt. Durch ein Drücken auf die erste Drucktaste 7 kann die Bedieneinheit 1 wieder aus der von dem Rahmen 21 gebildeten Halterung z.B. durch Lösen einer Verrastung herausgelöst werden.

In der Figur 3 ist eine Seitenansicht einer erfindungsgemäßen Bedieneinheit eingesetzt in die Autoradioeinheit 20 dargestellt. An einer unteren Seite in der Umgebung der ersten Drucktaste 7 ist die Bedieneinheit 1 an einer Drehachse 25 gelagert. Bei einer Betätigung der zweiten Drucktaste 8 werden nur Rasthaken 26 gelöst, so dass die Bedieneinheit 1 weiter an der Drehachse 25 gehalten und um die Drehachse 25 drehbar ist, so dass nach einem Herausklappen aus der zur Aufnahme der Bedieneinheit 1 in dem Rahmen 21 gebildeten Vertiefung 27 ein Datenträgerschacht 28 zugänglich ist, der hinter der Bedieneinheit 1 in der Autoradioeinheit 20 vorgesehen ist. Durch ein Hochklappen und einer damit verbundenen Drehung um die Drehachse 25 in eine Pfeilrichtung 29 kann die Bedieneinheit 1 wieder in die Vertiefung 27 hineingeklappt und dort verrastet werden.

In der Figur 4 ist ein weiteres Ausführungsbeispiel für eine Autoradioeinheit 30 mit einer Bedieneinheit 1' dargestellt. Ein Rahmen 31 der Autoradioeinheit 30 lässt eine Öffnung für eine Bedieneinheit 1' frei, die nun nicht mehr die gesamte Frontseite der Autoradioeinheit 30 abdeckt, sondern die auf der Frontseite ferner Bedienelemente trägt, z.B. einen Drehknopf 32 und weitere Drucktasten 33. Eine erste Drucktaste zum Herunterklappen der Bedieneinheit 1' ist an der Bedieneinheit selbst angeordnet, um Zugang zu einem Datenträgerschacht der Autoradioeinheit 30 hinter der Bedieneinheit 1' zu erhalten. Über eine an der Autoradioeinheit 30 angeordnete Drucktaste 34 ist die Bedieneinheit 1' aus der Autoradioeinheit 30 herauslösbar, z.B. indem eine Rasthakenverbindung gelöst wird. Der Drehknopf 32 dient z.B. auch zur Auswahl von in der Anzeige 2 dargestellten Daten und damit zur Bedienung der Autoradioeinheit 30 und der Bedieneinheit 1. Die Darstellung von Informationen erfolgt entsprechend den Textzeilen 22 ebenfalls von links nach rechts in der Anzeige 2, also ausgerichtet von dem Lautsprecher 5 zu den Kipptasten 3.

Bei den beiden Ausführungsbeispielen gemäß der Figur 2 und gemäß der Figur 4 wird die Bedieneinheit 1, 1' vorzugsweise bei einem Verlassen des Fahrzeugs aus der Autoradioeinheit 20 bzw. 30 entnommen, so dass lediglich die freigelassene Vertiefung von außerhalb des Fahrzeugs sichtbar ist. Hierdurch wird einem Diebstahlsanreiz vorgebeugt.

In der Figur 5 ist ein schematischer Aufbau der Bedieneinheit 1 und der Autoradioeinheit 20 dargestellt. Neben der Autoradiofunktion können in die Autoradioeinheit 20 auch weitere Fahrerinformationsfunktionen integriert sein, z.B. eine Navigationsfunktion oder eine Bordcomputerfunktion. Entsprechend einer Auswahl des Benutzers können in einer weiteren Ausführungsform in dem zweiten Anzeigebereich 24 ein Auswahlmenü zur Steuerung der Autoradiofunktion, der Navigationsfunktion oder der Bordcomputerfunktion angezeigt werden, so dass der zweite Anzeigebereich jeweils einer dieser Funktionen zugeordnet ist. Die Autoradioeinheit 20 ist mit einer Antenneneinheit 40 verbunden, die dem Empfang von Rundfunksignalen dient. Die Autoradioeinheit 20 weist eine Verarbeitungseinheit 41 auf, die der Umsetzung von empfangenen Rundfunksignalen in ein Audiosignal dient, das über eine Lautsprechereinheit 42 ausgegeben wird. Über einen elektrischen Kontakt, z.B. einem geeignet ausgeführten Stecker an einer Seitenfläche oder an der Rückseite der Bedieneinheit 1, ist die Autoradioeinheit 20 über eine elektrische Verbindung 43, z.B. einen Steckerkontakt, mit der Bedieneinheit 1 verbunden. In einer weiteren Ausführungsform kann auch eine Verbindung über eine drahltlose Funkschnittstelle 44, z.B. eine sogenannte Bluetooth-Schnittstelle, zwischen der Autoradioeinheit 20 und der Bedieneinheit 1 hergestellt werden. In einer bevorzugten Ausführungsform weist die Autoradioeinheit 20 ein Datenträgerlaufwerk 53 zur Aufnahme eines Datenträgers auf, z.B. eines optischen Datenträgers wie einer CD-ROM. Ergänzend kann auch eine nicht flüchtige Speichereinheit 54 in die Autoradioeinheit 20 integriert sein. Die Bedieneinheit 1 weist eine Recheneinheit 45 auf, die der Steuerung der Anzeige 2 dient. Die Recheneinheit 45 gibt auszugebende Bilddaten entsprechend einer gewählten Einstellung auf der Anzeige 2 aus.

Ist die Bedieneinheit 1 nicht in die Autoradioeinheit 20 eingesetzt, so erfolgt eine Darstellung von Informationen in der Anzeige 2 in der Ausrichtung gemäß den Zeilenlinien 12 gemäß der Figur 1. Wird die Verbindung über die elektrische Verbindung 43 oder über die Funkschnittstelle 44 geschlossen, stellt die Recheneinheit 45 die Anzeigendarstellung in der Anzeige 2 in der Weise um, dass eine Drehung um 90° im Uhrzeigersinn erfolgt. In einer weiteren Ausführungsform kann die Bedieneinheit 1 auch um 180° gedreht in die Autoradioeinheit 20 eingesetzt werden, so dass dann eine Drehung der Anzeige um 90° gegen den Uhrzeigersinn ausgehend von der Darstellung gemäß der Figur 1 erforderlich ist. Nach einem Einsetzen der Bedieneinheit 1 in die Autoradioeinheit 20 wird der Inhalt der Anzeige 2 vor dem Einsetzen nun in dem ersten Bereich 23 der Anzeige 2 gedreht dargestellt. Zudem erfolgt eine Verkleinerung der Anzeigegröße der zuvor dargestellten Informationen auf die Fläche des ersten Anzeigebereichs 23, zumindest sofern zuvor die Anzeigefläche ausgefüllt wurde.

Der Bedieneinheit 1 ist ferner eine Speichereinheit 46 zugeordnet, die insbesondere der Speicherung von Audiodaten dient. Diese Audiodaten können der Bedieneinheit 1 über eine externe Schnittstelle 47 z.B. von einer Recheneinheit zugeführt werden. Die Audiodaten können einerseits über den Lautsprecher 5 oder über einen entsprechenden Ohrhöreranschluss 48 der Bedieneinheit 1 ausgegeben werden. Ferner können die Audiodaten auch über die elektrische Verbindung 43 oder über die Funkschnittstelle 44 an die Autoradioeinheit 20 übertragen und über die Lautsprechereinheit 42 ausgegeben werden. Die Lautsprechereinheit 42 ist im Fahrzeug angeordnet und ermöglicht eine Wiedergabe der Audiodaten in hoher Qualität.

Die Bedieneinheit 1 ist ferner als eine Mobilfunkeinheit ausgebildet, wobei vorzugsweise über eine integrierte Antenneneinheit 49 eine Verbindung zu Mobilfunksendern herstellbar ist. Über Bedieneinrichtungen 50, z.B. über die Ziffernblocktastatur 4, ist durch einen Benutzer die Mobilfunkverbindung zu einer von ihm bestimmten Rufnummer herstellbar. Eine Sprachaufnahme erfolgt über ein Mikrophon 6'. In einer bevorzugten Ausführungsform erfolgt nach einem Einbau der Bedieneinheit 1 in die Autoradioeinheit eine akustische Ausgabe über die Lautsprechereinheit 42 des Fahrzeugs. Eine Sprachaufnahme erfolgt über eine mit der Autoradioeinheit 20 verbundene Mikrophoneinheit 51, die an geeigneter Stelle vor dem Fahrer des Fahrzeugs im Fahrzeug angeordnet ist.

Ferner können über eine Anzeigeeinrichtung 52, die optional an die Autoradioeinheit 20 angeschlossen ist, und die z.B. zur Darstellung von Landkartendaten dient, auch in der Bedieneinheit 1 gespeicherte, weitere Informationen ausgegeben werden. Dies können z.B. Termininformationen oder weitere, in der Bedieneinheit 1 abgelegte Notizen des Fahrers sein. Ferner können auch akustische, aufgesprochene Informationen, die der Benutzer in der Bedieneinheit 1 gespeichert hat, über die Lautsprechereinheit 42 ausgegeben werden.

## Patentansprüche

1. Bedieneinheit zum Verbinden mit einem elektrischen Gerät, mit einer flächigen Anzeige (2) zur Darstellung von Informationen, wobei die Darstellung der Informationen in der Anzeige (2) drehbar ist, **dadurch gekennzeichnet, dass** nach dem Verbinden der Bedieneinheit (1) mit dem elektrischen Gerät (20) Informationen zur Steuerung von Funktionen der Bedieneinheit (1) in einem ersten Anzeigebereich (23) der Anzeige (2) angezeigt sind und dass Informationen zur Steuerung von Funktionen des elektrischen Geräts (20) in einem zweiten Anzeigebereich (24) der Anzeige (2) angezeigt sind.

2. Bedieneinheit nach Anspruch 1, **dadurch gekennzeichnet, dass** der erste und der zweite Anzeigebereich (23, 24) nebeneinander getrennt voneinander auf der Anzeige (2) angeordnet sind.

3. Bedieneinheit nach einem der vorherigen Ansprüche, **dadurch gekennzeichnet, dass** die Darstellung in der Anzeige (2) mit einem Einsetzen in eine Halterung (21) an dem elektrischen Gerät (20) automatisch änderbar ist.

4. Bedieneinheit nach einem der vorherigen Ansprüche, **dadurch gekennzeichnet, dass** die Darstellung der Informationen des ersten Anzeigebereichs (23) in der Anzeige (2) um 90 Grad drehbar ist.

5. Bedieneinheit nach einem der vorherigen Ansprüche, **dadurch gekennzeichnet, dass** in der Bedieneinheit (1) eine Speichereinheit (46) zur Speicherung von Audiodaten angeordnet ist.

6. Bedieneinheit nach einem der vorherigen Ansprüche **dadurch gekennzeichnet, dass** die Anzeige (2) als eine Flüssigkristallanzeige oder als eine Elektrolumineszenzanzeige ausgeführt ist.

7. Bedieneinheit nach einem der vorherigen Ansprüche **dadurch gekennzeichnet, dass** in die Bedieneinheit (1) eine Funkschnittstelle (49), insbesondere zur Herstellung einer Mobilfunkverbindung, integriert ist.

8. Elektrisches Gerät insbesondere in einem Fahrzeug zum Anbringen einer Bedieneinheit nach einem der vorherigen Ansprüche.

9. Elektrisches Gerät nach Anspruch 8, **dadurch gekennzeichnet, dass** das elektrische Gerät mit einer weitern akustischen (42) oder optischen (52) Ausgabeeinheit verbunden ist und dass Daten der Bedieneinheit (1) über die Ausgabeeinheit (42, 52) ausgebbar sind.

10. Elektrisches Gerät nach einem der Ansprüche 8-9, **dadurch gekennzeichnet, dass** an der Vorderseite des elektrischen Geräts (20) mindestens ein weiteres Bedienelement (32, 33), insbesondere ein Drehknopf, angeordnet ist.
